# DEMANDE DE BREVET EUROPEEN

(11) **EP 3 937 323 A1**
(43) Date de publication de la demande: **12.01.2022**
(21) Numéro de dépôt: 21183226.6
(22) Date de dépôt: 01.07.2021
(51) Int. Cl.: H02G 9/04, E01C 11/22, E04H 6/42, E02D 27/46, E04H 3/02, E04H 14/00, H02G 3/04

(54) **EQUIPEMENT POUR AIRE D'ETAPES POUR CAMPING-CARS**

(30) Priorité: 09.07.2020 FR 2007252
(71) Demandeur: Camping-Car Park, 44210 Pornic (FR)
(72) Inventeur: MORICE, Laurent, 44210 PORNIC (FR)
(74) Mandataire: Nony

(57) **Abrégé**

Equipement (2) pour aire d'étapes pour camping-cars, comportant au moins une longrine d'accès (3, 3a, 3b) préfabriquée s'étendant selon un axe longitudinal (X) et présentant plusieurs bords (15, 16, 17, 18, 19, 20) dont une surface supérieure (15), la longrine d'accès (3, 3a, 3b) comportant :
- une pluralité d'éléments de fixation (21) fixés sur la surface supérieure (15) de la longrine d'accès (3, 3a, 3b), agencés pour permettre la fixation d'au moins un mobilier urbain (4, 5, 6, 7, 9, 10) à un endroit prédéterminé et
- au moins une réservation (25, 25a, 25b) intérieure pour le passage d'au moins un câble électrique et/ou informatique afin d'alimenter ledit au moins un mobilier urbain (4, 5, 6, 7, 9, 10, 11) en électricité et/ou en connexion informatique, ladite au moins une réservation (25) traversant au moins partiellement la longrine d'accès (3, 3a, 3b) et débouchant sur au moins un de ses bords (15, 16, 17, 18, 19, 20).

## Description

### Domaine technique

La présente invention concerne un équipement pour aire d'étapes pour camping-cars ainsi qu'un procédé d'aménagement d'une aire d'étapes pour camping-cars à l'aide d'un tel équipement et une telle aire ainsi aménagée.

### Technique antérieure

Les conducteurs de camping-cars ont besoin, en voyage, de passer régulièrement dans des aires aménagées spécialement afin de réaliser un entretien tel qu'une vidange des eaux sales, un plein d'eau potable, et, le cas échéant, d'avoir un accès à une alimentation électrique et/ou une connexion informatique. Par ailleurs, les camping-cars ne peuvent pas stationner sur tous les emplacements de stationnement pour véhicules ou sur tous les parkings notamment dans les zones touristiques ou les centres-villes.

Pour aménager ou restaurer une aire adaptée aux camping-cars, les équipements sont complexes à fabriquer et les raccordements doivent être précis. Ainsi, le temps nécessaire pour l'aménagement ou la restauration d'une aire adaptée aux camping-cars peut être relativement long et le résultat parfois sujet à des malfaçons.

Il existe ainsi un besoin pour faciliter la création d'aires de stationnement équipées pour accueillir les camping-cars pour un passage ou pour un stationnement plus long, et notamment réduire le temps nécessaire et la complexité de réalisation lors de l'aménagement de telles aires et pour assurer un résultat satisfaisant et reproductible entre deux aires différentes.

### Exposé de l'invention

### Equipement pour aire d'étapes pour camping-cars

L'invention y parvient, selon l'un de ses aspects, grâce à un équipement pour aire d'étapes pour camping-cars, comportant au moins une longrine d'accès préfabriquée s'étendant selon un axe longitudinal et présentant plusieurs bords dont une surface supérieure, la longrine d'accès comportant :
- une pluralité d'éléments de fixation fixés sur la surface supérieure de la longrine d'accès, agencés pour permettre la fixation d'au moins un mobilier urbain à un endroit prédéterminé, et
- au moins une réservation intérieure pour le passage d'au moins un câble électrique et/ou informatique afin d'alimenter ledit au moins un mobilier urbain en électricité et/ou en connexion informatique, ladite au moins une réservation traversant au moins partiellement la longrine d'accès et débouchant sur au moins un de ses bords.

Grâce à l'invention, on bénéficie d'un équipement préfabriqué qui peut être installé et raccordé facilement pour l'aménagement de l'accès à une aire d'étapes pour camping-cars. En effet, il suffit de créer un emplacement pour accueillir la longrine d'accès et de la raccorder à un ou plusieurs mobiliers urbains et câbles électriques et/ou informatiques.

Par « longrine », on comprend un élément allongé, par exemple de forme sensiblement parallélépipédique, réalisé notamment en matériau cimentaire, notamment en béton, par exemple en béton armé ou béton hautes performances (BHP).

Dans toute la description, les valeurs des diamètres sont comprises comme correspondant à celles des diamètres extérieurs.

Les éléments de fixation ou inserts peuvent être intégrés lors du moulage de la longrine ou être rapportés sur la longrine. Ils comprennent par exemple des inserts filetés, tels que des goujons.

De préférence, ladite au moins une réservation pour le passage d'au moins un câble électrique, notamment courant fort, et/ou informatique, notamment courant faible, est munie ou délimitée par un tuyau, par exemple un tuyau annelé, ou une gaine, notamment un tuyau en matériau polymère, par exemple en PVC. Ladite longrine d'accès peut comporter deux réservations distinctes, l'une étant dédiée au passage d'au moins un câble électrique, notamment courant fort, auquel cas le tuyau présente avantageusement un diamètre d'environ 100 mm, l'autre étant dédiée au passage d'au moins un câble informatique, notamment courant faible tel que ceux dits de catégorie 6, auquel cas le tuyau présente avantageusement un diamètre d'environ 60 mm. Dans le cas où il y a deux réservations distinctes, celles-ci peuvent s'étendre sensiblement parallèlement entre elles.

Ladite au moins une réservation pour le passage d'au moins un câble électrique et/ou informatique s'étend par exemple en partie selon l'axe longitudinal de la longrine d'accès, voire la traverse depuis un bord latéral jusqu'à un bord latéral opposé. Ladite au moins une réservation pour le passage d'au moins un câble électrique et/ou informatique comporte de préférence au moins une portion s'étendant vers le haut débouchant par une ouverture sur la surface supérieure de la longrine d'accès au niveau dudit au moins un mobilier urbain à alimenter en électricité et/ou connexion informatique. Ainsi, on peut faire passer le câble électrique et/ou informatique depuis l'extérieur jusque dans ledit au moins mobilier urbain en passant par la longrine d'accès.

La longrine d'accès comporte de préférence en outre au moins une réservation pour le passage d'un câble électrique destiné à être relié à une boucle d'induction magnétique de détection de véhicule. Une telle réservation peut être munie ou délimitée par une gaine de diamètre par exemple égal à 25 mm.

Les éléments de fixation peuvent permettre de fixer sur la longrine d'accès un ou plusieurs mobiliers urbains choisis dans le groupe constitué par un automate, une borne d'entrée et/ou de sortie, un ensemble barrière, une armoire TGBT (Tableau Général Basse Tension), un mât Wifi et/ou un système de vidéo-surveillance, un luminaire et un panneau de signalisation.

L'équipement peut comporter au moins un mobilier urbain, de préférence plusieurs mobiliers urbains, choisi dans le groupe constitué par un automate, une borne d'entrée et/ou de sortie, un ensemble barrière, une armoire TGBT (Tableau Général Basse Tension), un mât Wifi et/ou un système de vidéo-surveillance, un luminaire, un panneau de signalisation et une caméra de plaques d'immatriculation.

La longrine d'accès constitue donc d'une part un élément de support du ou des mobiliers urbains et d'autre part un élément permettant la connexion électrique et/ou informatique de ce ou ces mobiliers urbains.

Lorsque le mobilier urbain comporte un ensemble barrière et une borne d'entrée et/ou de sortie, la longrine d'accès comporte de préférence au moins deux réservations pour le passage d'un câble électrique destiné à être relié à une boucle d'induction magnétique de détection de véhicule pour relier respectivement l'ensemble barrière au dit câble électrique d'accès à la boucle d'induction magnétique de détection de véhicule et la borne d'entrée et/ou de sortie à la boucle d'induction magnétique de détection de véhicule.

Dans un mode de réalisation, l'équipement comporte une unique longrine d'accès configurée pour permettre l'entrée et la sortie de véhicules. Un tel mode de réalisation peut être mis en œuvre pour une grande aire d'étapes.

Dans un autre mode de réalisation, l'équipement comporte deux longrines d'accès, la première longrine d'accès étant configurée pour permettre l'entrée de véhicules et la deuxième longrine d'accès étant configurée pour permettre la sortie de véhicules. Cela peut permettre d'équiper une plus petite aire d'étapes.

Dans ce dernier cas, la première longrine d'accès peut être configurée pour être reliée à un automate, une borne d'entrée, une armoire TGBT, un ensemble barrière et un mât wifi, par exemple, tandis que la deuxième longrine d'accès peut être configurée pour être reliée uniquement à une borne de sortie. Les deux longrines d'accès peuvent s'étendre, lorsqu'installées sur l'aire, sensiblement parallèlement entre elles et être séparées d'une distance au moins égale à la longueur de la barrière.

La ou les longrines d'accès sont avantageusement, lorsqu'installées sur l'aire, disposées à l'entrée/sortie de l'aire et agencées pour contrôler l'entrée et la sortie des camping-cars et éventuellement d'autres véhicules.

La ou chaque longrine d'accès peut présenter une longueur comprise entre 2 et 10 m, par exemple égale à 6 m, une largeur comprise entre à 0,5 et 1 m, par exemple égale à 0,8 m, une épaisseur ou hauteur comprise entre 0,15 et 0,5 m, par exemple égale à 0,25 m.

L'équipement comporte, par ailleurs, de préférence :
- au moins une longrine de service, préfabriquée, s'étendant selon un axe longitudinal et présentant plusieurs bords dont une surface supérieure, la longrine de service comportant au moins un élément de fixation fixé sur sa surface supérieure pour recevoir une borne de service,
- au moins une dalle de service, préfabriquée, associée à ladite au moins une longrine de service pour l'évacuation d'eaux usées, notamment deux dalles de service associées à ladite au moins une longrine de service.

Ladite au moins une longrine de service et ladite au moins une dalle de service permettent de réaliser les services des camping-cars. Elles sont de préférence situées, lorsqu'installées sur l'aire, à proximité immédiate entre elles et à distance de la ou des longrines d'accès.

Le ou les éléments de fixation ou inserts peuvent être intégrés lors du moulage de la longrine ou être rapportés sur la longrine. Ils comprennent par exemple des inserts filetés, tels que des goujons.

Lorsque l'équipement comporte au moins une longrine de service et une dalle de service préfabriquées, l'aménagement de l'aire est facilité car il n'y a pas à les fabriquer sur place.

Dans ce cas, ladite au moins une longrine de service comporte de préférence au moins :
- une réservation pour recevoir au moins un tuyau d'arrivée d'eau afin d'alimenter la borne de service en eau notamment potable,
- au moins un caniveau de drainage, notamment deux caniveaux de drainage, ouvert(s) sur la surface supérieure de ladite au moins une longrine de service de manière à se trouver à côté, notamment de part et d'autre, des éléments de fixation de la borne de service, et muni(s) d'une ouverture dans le fond du ou de chaque caniveau pour permettre l'évacuation d'eaux usées,
- au moins une réservation intérieure d'évacuation d'eaux usées, traversant la longrine de service depuis un bord de celle-ci et débouchant sur ladite ou lesdites ouverture(s) prévue(s) dans ledit ou lesdits caniveau(x) de drainage.

L'équipement peut comporter une réservation supplémentaire, intérieure, d'évacuation d'eaux usées, de préférence munie ou délimitée par un tuyau, notamment en PVC, de préférence de diamètre 100 mm, comportant au moins une portion se terminant par une ouverture débouchant sur la surface supérieure de la longrine de service notamment au niveau de l'emplacement de la borne de service, pour permettre la connexion d'un tuyau d'évacuation d'eaux usées présent dans la borne de service.

La longrine de service comporte de préférence au moins une réservation, de préférence munie ou délimitée par un tuyau, notamment un tuyau en PVC, de préférence de diamètre 100 mm, pour le passage d'au moins un câble électrique, notamment pour courants forts, et/ou informatique, afin d'alimenter la borne de service en électricité et/ou en connexion informatique.

La dalle de service présente avantageusement, dans une surface supérieure, une ouverture, notamment allongée, de préférence centrale, pour permettre l'évacuation d'eaux usées, et quatre pentes convergeant vers ladite ouverture et formant tout ou partie de la surface supérieure de ladite dalle de service.

La longrine de service peut présenter une longueur comprise entre 1 et 5 m, par exemple égale à 3 m, une largeur comprise entre à 0,5 et 3 m, par exemple égale à 1,4 m, une épaisseur ou hauteur comprise entre 0,2 et 0,5 m, par exemple égale à 0,3 m.

Ladite au moins une longrine d'accès et/ou ladite au moins une longrine de service peu(ven)t comporter une pluralité d'ancres ou d'anneaux de levage, notamment disposées sur des bords latéraux de ladite au moins une longrine d'accès et/ou de service.

Cela permet de faciliter la manutention à l'aide d'un appareil de levage de la longrine notamment lors de l'aménagement de l'aire.

La ou chaque longrine, d'accès ou de service, de même que la dalle de service, peut être réalisée en matériau cimentaire, notamment en béton, par exemple en béton armé ou béton hautes performances (BHP)., par exemple par moulage en usine. Lors de sa fabrication, au moment du coulage du matériau cimentaire, un ou des tuyaux ou gaines peuvent être présents en des endroits prédéterminés pour former la ou les réservations pour le passage de câbles électriques et/ou informatiques et/ou pour l'évacuation d'eaux usées.

L'invention a encore pour objet, selon un autre de ses aspects, en combinaison totale ou partielle avec ce qui précède, un équipement pour aire d'étapes pour camping-cars comportant :
- au moins une longrine de service, préfabriquée, s'étendant selon un axe longitudinal et présentant plusieurs bords dont une surface supérieure, la longrine de service comportant au moins un élément de fixation fixé sur sa surface supérieure pour recevoir une borne de service,
- au moins une dalle de service, préfabriquée, associée à ladite au moins une longrine de service pour l'évacuation d'eaux usées, notamment deux dalles de service associées à ladite au moins une longrine de service.
Un tel équipement peut être utilisé pour aménager une zone de service et la longrine de service et la dalle de service peuvent être telles que définies plus haut.

### Aire d'étapes pour camping-cars

L'invention a encore pour objet, selon un autre de ses aspects, en combinaison avec ce qui précède, une aire d'étapes pour camping-cars, comportant au moins un équipement tel que défini plus haut.

L'équipement est avantageusement disposé dans une zone d'accès et de préférence également dans au moins une zone de service, étant disposé de préférence partiellement dans la zone d'accès et partiellement dans la zone de service. La zone de service est de préférence à distance de la zone d'accès.

L'équipement dans la zone d'accès comporte de préférence au moins une longrine d'accès et au moins un mobilier urbain fixé sur ladite au moins une longrine d'accès. L'équipement dans la ou chaque zone de service comporte de préférence au moins une longrine de service et au moins une dalle de service.

L'aire d'étapes est prévue pour accueillir des camping-cars mais elle peut permettre l'accès à d'autres types de véhicules tels que des voitures, des véhicules à deux roues, des camions, des caravanes ou autres véhicules.

L'aire d'étapes peut comporter par ailleurs des installations comme des sanitaires, des emplacements de stationnement, des aires de jeux et des zones de circulation, de manière connue en soi.

### Procédé d'aménagement d'une aire d'étapes pour camping-cars

L'invention a encore pour objet, selon un autre de ses aspects, un procédé d'aménagement d'une aire d'étapes pour camping-cars, à l'aide d'un équipement selon l'une quelconque des revendications précédentes, comportant les étapes consistant à :
(a) Etape a : préparer au moins un emplacement destiné à recevoir la ou chaque longrine d'accès et/ou longrine de service et dalle de service,
(b) Etape b : positionner la ou chaque longrine d'accès et/ou longrine de service et dalle de service dans ledit au moins un emplacement,
(c) Etape c : raccorder la ou chaque longrine d'accès et/ou longrine de service et dalle de service à au moins une alimentation électrique et/ou une connexion informatique et/ou une arrivée d'eau et/ou une évacuation d'eaux usées, notamment d'eaux usées et/ou une ou des boucles d'induction magnétique,
(d) Etape d : fixer au moins un mobilier urbain sur la ou chaque longrine d'accès et/ou une borne de service sur la longrine de service.

Grâce à l'invention, le procédé d'aménagement d'une aire d'étapes pour camping-cars est considérablement simplifié pour la société de travaux publics locale qui la réalisera. De plus, la qualité de réalisation est améliorée et comparable entre deux aires différentes, même si ce sont deux sociétés de travaux différentes qui les ont réalisées.

De préférence, au moins un emplacement, au niveau de l'entrée de l'aire, est prévu pour recevoir la ou les longrines d'accès. Au moins un emplacement est également, de préférence, prévu au sein de l'aire pour recevoir la ou les longrines de service et la ou les dalles de service.

L'étape a de préparation de l'emplacement peut consister à creuser dans le sol. Elle peut également consister à couler une dalle, par exemple en matériau cellulaire tel qu'un béton, notamment fibré, ou en bitume, présentant avantageusement une surface supérieure plane, pour supporter chaque longrine d'accès ou de service ou dalle de service. Alternativement ou en complément, cette étape de préparation peut consister à couler une dalle, par exemple en matériau cellulaire tel qu'un béton, notamment fibré, ou en bitume, présentant avantageusement une surface supérieure plane, pour caler latéralement chaque longrine d'accès ou de service ou dalle de service.

L'étape b de positionnement peut comporter la manutention, notamment à l'aide des ancres ou des anneaux de levage, de chaque longrine d'accès ou de service ou dalle de service. La longrine d'accès ou de service ou dalle de service repose au sol de par son propre poids.

Après mise en œuvre du procédé, on a ainsi de préférence une zone d'accès équipée de la ou des longrines d'accès avec son ou leur mobilier urbain et une zone de service équipée de la ou des longrines de service et dalle(s) de service avec leur(s) borne(s) de service.

L'ordre des étapes, notamment c et d, peut être interchangé. Le procédé peut être mis en œuvre plusieurs fois, pour chaque longrine d'accès ou de service ou pour chaque dalle de service, afin de finaliser l'aménagement de l'aire d'étapes pour camping-cars.

Bien entendu, l'aire peut être adaptée pour recevoir d'autres aménagements et accueillir d'autres types de véhicules que des camping-cars. Dans ce cas, la zone d'accès pourra servir à d'autres véhicules que des camping-cars. La zone de service reste, quant à elle, adaptée pour les camping-cars ou similaires.

### Brève description des dessins

L'invention pourra être mieux comprise à la lecture de la description détaillée qui va suivre, d'exemples de mise en œuvre non limitatifs de celle-ci, et à l'examen du dessin annexé, sur lequel :
[Fig 1] la figure 1 est une vue de dessus schématique d'une zone d'accès à une aire d'étapes pour camping-cars pourvue d'un équipement selon l'invention,
[Fig 2] la figure 2 est une vue schématique en perspective représentant isolément un exemple de longrine d'accès d'un équipement selon l'invention,
[Fig 3] la figure 3 est une vue en coupe longitudinale schématique de la longrine d'accès de la figure 2,
[Fig 4] la figure 4 est une vue de dessus schématique de la longrine d'accès de la figure 2,
[Fig 5] la figure 5 est une vue schématique en coupe transversale de la longrine d'accès de la figure 2,
[Fig 6] la figure 6 est une vue schématique en perspective d'un autre exemple de longrine d'accès d'un équipement selon l'invention,
[Fig 7] la figure 7 est une vue schématique en coupe transversale d'une zone d'accès munie d'un équipement selon l'invention,
[Fig 8] la figure 8 est une vue de dessus schématique d'une zone de service munie d'un équipement selon l'invention,
[Fig 9] la figure 9 est une vue schématique en coupe transversale de la zone de service de la figure 8,
[Fig 10] la figure 10 est une vue schématique, en perspective et de manière isolée, de la longrine de service de l'équipement de la figure 8,
[Fig 11] la figure 11 est une vue de dessus schématique de la longrine de service de la figure 10,
[Fig 12] la figure 12 est une vue schématique en coupe longitudinale de la longrine de service de la figure 10,
[Fig 13] la figure 13 est une vue schématique en coupe transversale de la longrine de service de la figure 10,
[Fig 14] la figure 14 représente isolément, en coupe transversale et de manière schématique, la borne de service de la zone de service illustrée sur la figure 8,
[Fig 15] la figure 15 est une vue schématique, en perspective et de manière isolée, de la dalle de service de l'équipement de la figure 8,
[Fig 16] la figure 16 est une vue schématique en coupe longitudinale de la dalle de service de la figure 15,
[Fig 17] la figure 17 représente en coupe transversale schématique la dalle de service de la figure 15, et
[Fig 18] la figure 18 représente schématiquement en vue de dessus la dalle de service de la figure 15.

### Description détaillée

Dans la suite de la description, les éléments identiques ou de fonctions identiques portent le même signe de référence. A des fins de concision de la présente description, ils ne sont pas décrits en regard de chacune des figures, seules les différences entre les modes de réalisation étant décrites.

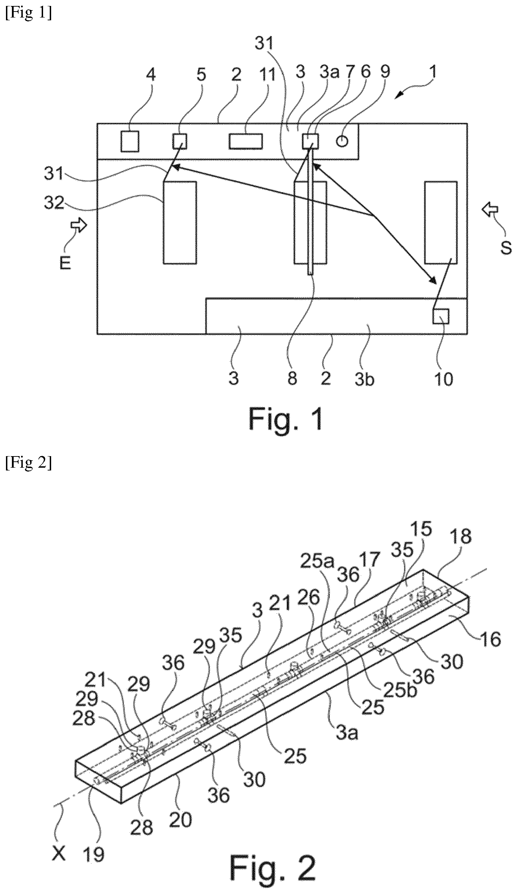

On a illustré à la figure 1 une zone d'accès 1 d'une aire d'étapes pour camping-cars. La zone d'accès 1 est aménagée avec un équipement 2 selon l'invention comportant une première longrine d'accès 3, une deuxième longrine d'accès 3, numérotées respectivement 3a et 3b. La longrine d'accès 3a est surmontée d'une pluralité de mobiliers urbains, à savoir, dans cet exemple, un automate 4, une borne d'entrée 5, une armoire TGBT 11, un ensemble barrière 6 incluant un support de barrière 7 et la barrière 8 en elle-même, ainsi qu'un mât Wi-Fi 9.

La longrine d'accès 3b supporte quant à elle uniquement une borne de sortie 10, dans cet exemple. Les camping-cars, ou autres véhicules, entrent dans l'aire en circulant dans le sens de la flèche E et ressortent de l'aire en circulant dans le sens de la flèche S.

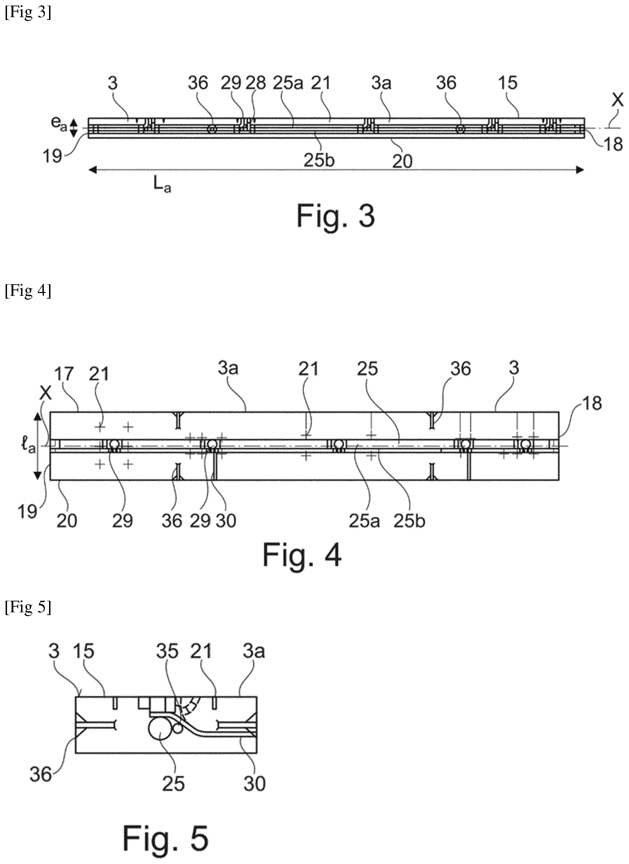

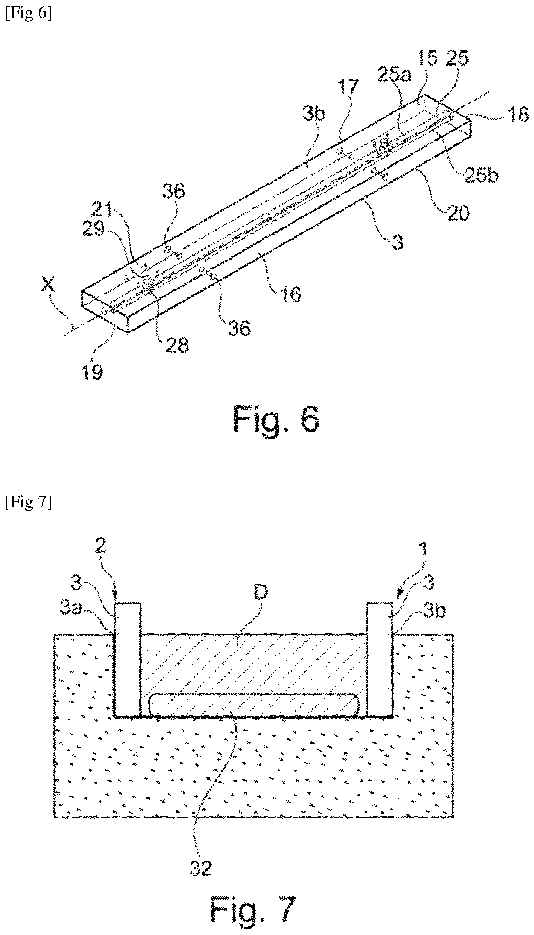

La longrine d'accès 3, comme visible sur les figures 2 à 5, se présente sous la forme d'une poutre allongée selon un axe X longitudinal. Dans l'exemple illustré, la longrine d'accès 3a été réalisée en béton, étant préfabriquée en usine. La longrine d'accès 3 se présente sous forme d'un parallélépipède avec une surface supérieure 15, des bords latéraux 16 et 17, des bords d'extrémités longitudinales 18 et 19 et une surface inférieure 20. Sur la figure 2, on visualise par transparence l'intérieur de la longrine d'accès 3 mais en réalité on ne peut pas voir l'intérieur de celle-ci, les matériaux utilisés pour la réaliser n'étant pas transparents. Il en est de même pour la longrine d'accès 3b illustrée sur la figure 6. La longueur La de la longrine d'accès 3a, correspondant à la longueur des bords latéraux 16 et 17, est dans cet exemple égale à 6 m. La largeur lₐ de la longrine d'accès 3a, correspondant à la longueur des bords d'extrémités longitudinales 18 et 19 est dans cet exemple égale à 0,8 m. La hauteur ou épaisseur eₐ de la longrine d'accès 3 a, correspondant à la distance séparant la surface supérieure 15 de la surface inférieure 20, est égale dans cet exemple à 0,25 m.

La longrine d'accès 3a comporte une pluralité d'éléments de fixation 21 consistant dans cet exemple en des inserts filetés, notamment tels que des goujons, fixés sur la surface supérieure 15 de la longrine d'accès 3 et agencés pour permettre la fixation de mobiliers urbains à des endroits prédéterminés. En l'espèce, les éléments de fixation 21 permettent la fixation de l'automate 4, de la borne d'entrée 5, de l'armoire TGBT 11, du support 7 de l'ensemble barrière 6 et du mât Wi-Fi 9, illustrés schématiquement sur la figure 1 et connus en eux-mêmes.

Par ailleurs, la longrine d'accès 3 comporte au moins une réservation 25 pour le passage d'au moins un câble électrique et/ou informatique afin d'alimenter chaque mobilier urbain en électricité et/ou en connexion informatique. Dans cet exemple, la réservation 25 traverse la longrine d'accès 3 selon l'axe longitudinal X depuis le bord d'extrémité longitudinal 18 jusqu'à l'autre bord d'extrémité longitudinal 19.

Dans cet exemple, la longrine d'accès 3 comporte deux réservations 25 numérotées 25a et 25b, la réservation 25 étant délimitée par un tuyau 26 réalisé dans cet exemple en PVC (polychlorure de vinyle) de diamètre 100 mm. Ce tuyau 26, délimitant la réservation 25a, permet le passage d'un câble électrique pour courants forts. La réservation 25b, s'étendant parallèlement et contre la réservation 25a dans cet exemple, est, quant à elle, délimitée par un tuyau, réalisé dans cet exemple en PVC de diamètre inférieur, dans cet exemple de diamètre égal à 60 mm, pour le passage de câbles informatiques afin d'établir une connexion informatique pour le ou chaque mobilier urbain.

Chacune des réservations 25a et 25b comporte au moins une portion 28 s'étendant vers le haut, en l'espèce plusieurs portions 28 s'étendant vers le haut et débouchant par une ouverture 29 sur la surface supérieure 15 de la longrine d'accès 3 au niveau de chaque mobilier urbain à alimenter en électricité et/ou en connexion informatique.

Par ailleurs, la longrine d'accès 3 comporte deux réservations 30 pour le passage d'un câble électrique destiné à être relié à une boucle d'induction magnétique 32 par le câble 31 comme visible sur la figure 1. Dans cet exemple, les réservations 30 sont délimitées par des gaines de diamètre égal à 25 mm. Le système de détection de véhicules avec des boucles d'induction magnétique 32 est organisé pour empêcher la fraude et permettre l'ouverture de la barrière 8 au passage d'un véhicule autorisé et la fermeture de la barrière 8 en l'absence de véhicules disposés à son niveau.

Comme visible sur les figures 2, 4 et 5 notamment, les réservations 30 sont disposées sensiblement transversalement à l'axe longitudinal X et permettent d'être connectées à la borne d'entrée 5 et à l'ensemble barrière 6. Les réservations 30 comportent également chacune une portion s'étendant vers le haut et débouchant sur la surface supérieure 15 par une ouverture 35.

La longrine d'accès 3 comporte encore une pluralité d'ancres de levage 36, au nombre de quatre dans cet exemple, pour faciliter la manutention à l'aide d'un appareil de levage de la longrine d'accès 3.

On a représenté sur la figure 6 la longrine d'accès 3b agencée pour supporter la borne de sortie comme visible sur la figure 1. La longrine d'accès 3b diffère de la longrine d'accès 3a en ce qu'elle ne supporte pas autant de mobilier urbain que la longrine d'accès 3a dans cet exemple. Les réservations sont adaptées en conséquence, comme visible sur la figure 6. Les dimensions de la longrine d'accès 3b sont les mêmes que celles de la longrine d'accès 3 a dans cet exemple, mais elles peuvent être différentes sans sortir du cadre de l'invention. Les mobiliers urbains pouvant être présents sur la longrine d'accès 3b peuvent être un totem interactif ou encore une caméra de plaques d'immatriculation.

On a représenté sur la figure 7 un exemple d'aménagement d'une zone d'accès 1. Pour aménager la zone d'accès 1, on a creusé un emplacement et on y a positionné, comme visible, deux longrines d'accès 3, notamment 3a et 3b. On a également installé la ou les boucles d'induction magnétique 32 et on l'a ou les a raccordée(s) à la ou aux longrines 3. On a ensuite coulé une dalle D, par exemple en bitume ou en béton, au-dessus de la boucle d'induction magnétique 32, notamment de manière à caler latéralement les longrines 3.. Puis on installe les différents mobiliers urbains sur les longrines 3, non visibles sur cette figure et on effectue les raccordements électriques et/ou d'informatique prévus pour la mise en service de l'aire d'étapes.

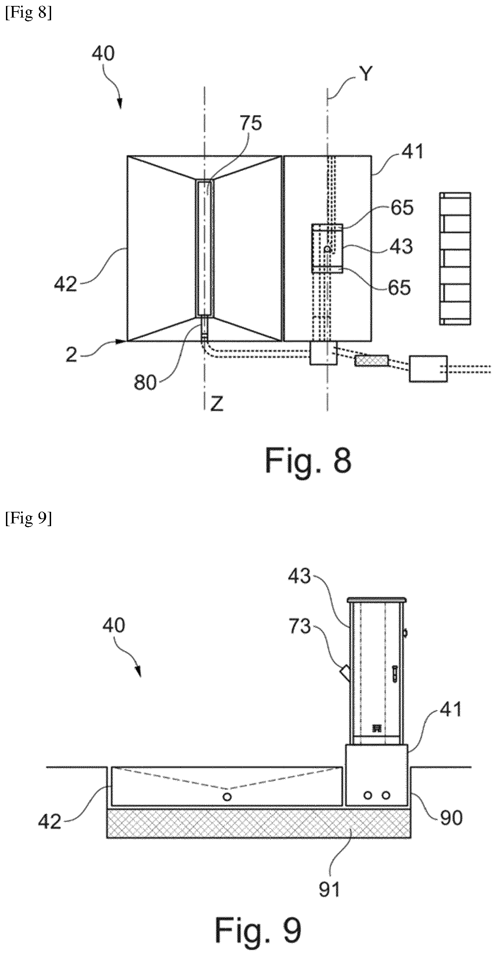

On a représenté sur les figures 8 et 9 un exemple de zone de service 40 pour une aire d'étapes selon l'invention.

La zone de service 40 de l'aire d'étapes pour camping-cars comporte un équipement 2 selon l'invention comportant une longrine de service 41 et une dalle de service 42 disposées à proximité l'une de l'autre.

La longrine de service 41 est préfabriquée, étant par exemple réalisée en béton, et est allongée selon un axe longitudinal Y. La longrine de service 41 comporte au moins un élément de fixation 42 pour la fixation d'une borne de service 43 visible en particulier sur la figure 8 et connue en elle-même.

La dalle de service 42 permet l'évacuation d'eaux usées. Elle est également préfabriquée, dans cet exemple de forme rectangulaire, en béton, et elle est associée à la longrine de service 41.

Dans un mode de réalisation non représenté, deux dalles de service 42 sont présentes de part et d'autre de la longrine de service 41.

La longrine de service 41 et la dalle de service 42 de la zone de service 40 permettent de réaliser les services des camping-cars. En effet, grâce à cette zone de service, le camping-car peut effectuer une vidange des eaux grises, c'est-à-dire des eaux sales issues de la douche et de l'évier et/ou du lavabo qui sont évacuées à l'aide de la dalle de service 42, ainsi qu'une vidange des eaux noires, issues des toilettes du camping-car, qui sont évacuées par un tuyau de la borne de service 43 comme expliqué ci-après.

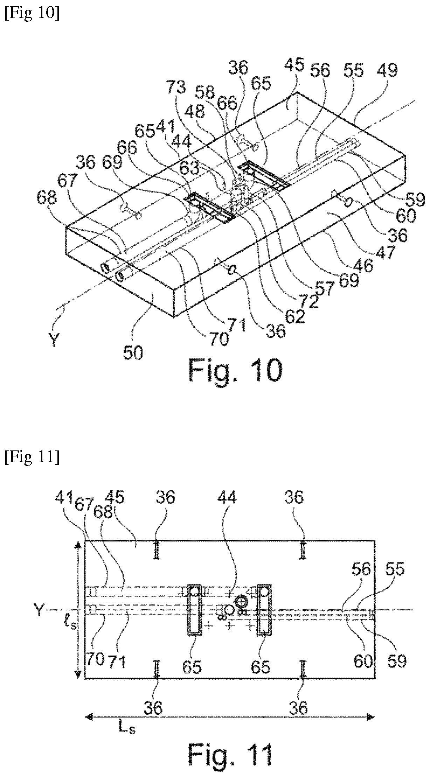

Comme visible sur les figures 10 à 13, la longrine de service 41 se présente sous forme d'un parallélépipède rectangle comportant une surface supérieure 45, une surface inférieure 46, des bords latéraux 47 et 48 ainsi que des bords d'extrémité 49 et 50. Une pluralité d'éléments de fixation 44 sont fixés sur la surface supérieure 45. Dans cet exemple, la longueur Lₛ de la longrine de service 41 est égale à 3 m, la largeur lₛ de la longrine de service 41 est égale à 1,4 m et l'épaisseur eₛ de la longrine de service 41 est égale à 0,3 m.

Des ancres de levage 36 sont présentes sur les bords latéraux 47 et 48 pour permettre la manutention de la longrine de service 41.

La longrine de service 41 comporte au moins une réservation 55 pour recevoir au moins un tuyau 56 d'arrivée d'eau afin d'alimenter la borne de service 43 en eau, notamment potable. Dans l'exemple illustré, la réservation 55 munie du tuyau 56 s'étend selon l'axe longitudinal Y et débouche d'un côté sur le bord d'extrémité 49 pour l'arrivée d'eau et comporte une portion 57 s'étendant vers le haut et débouchant d'un autre côté par une ouverture 58 sur la surface supérieure 45 au niveau de la borne de service 43.

Par ailleurs, la longrine de service 41 comporte une réservation 59, s'étendant dans cet exemple parallèlement à la réservation 55, et munie d'un tuyau 60 de même diamètre que le tuyau 56, à savoir 40 mm, pour permettre le passage de câbles électriques et/ou informatiques afin d'alimenter la borne de service 43 en électricité et/ou en connexion informatique. Le tuyau 60 débouche, comme le tuyau 56, sur le bord d'extrémité 49 de la longrine de service 41 et par ailleurs comporte une portion 62 s'étendant vers le haut et débouchant par une ouverture 63 sur la surface supérieure 45 au niveau de la borne de service 43.

La longrine de service 41 comporte en outre, formés dans sa surface supérieure 45, au moins un, deux dans cet exemple, caniveau(x) de drainage 65. Les caniveaux de drainage 65 sont ouverts sur la surface supérieure 45 de la longrine de service 41 de manière à se trouver à côté, dans cet exemple de part et d'autre, des éléments de fixation 44 de la borne de service 43. Ils sont munis d'une ouverture 66 dans le fond de chaque caniveau 65 pour permettre l'évacuation d'eau.

La longrine de service 41 comporte une réservation 68 délimitée par un tuyau 67 pour le passage et l'évacuation d'eaux usées en provenance des caniveaux de drainage 65 et s'étendant longitudinalement parallèlement à l'axe longitudinal Y comme visible sur les figures 10, 11 et 12 en particulier. Le tuyau 67, qui est un tuyau en PVC dans cet exemple, de diamètre 100 mm, comporte deux portions coudées 69 s'étendant vers le haut et connectées à l'ouverture 66 au fond de chaque caniveau de drainage 65. Les caniveaux de drainage 65 sont disposés de part et d'autre de la borne de service 43, comme visible sur la figure 8, et permettent l'évacuation éventuelle de trop-plein d'eau autour de la borne de service 43.

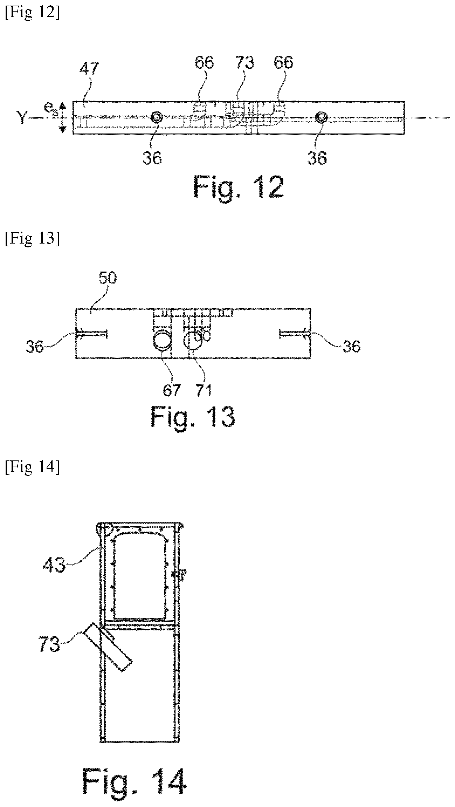

Un système d'évacuation d'eau en provenance de la borne de service 43 est également prévu. La longrine de service 41 est ainsi équipée d'une réservation 70 délimitée par un tuyau 71, également en PVC et de diamètre 100 mm dans cet exemple, s'étendant parallèlement au tuyau 67 et comportant une portion 72, s'étendant vers le haut et débouchant par une ouverture 73 au niveau de la borne de service 43, pour permettre l'évacuation d'eaux dites noires, qui seraient déversées par une ouverture 73 dans la borne de service 43 comme visible sur la figure 9 ou la figure 14.

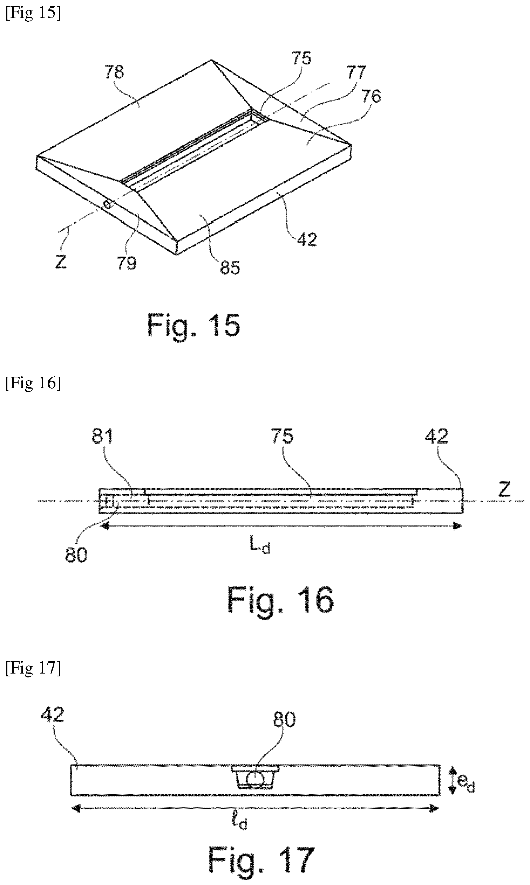

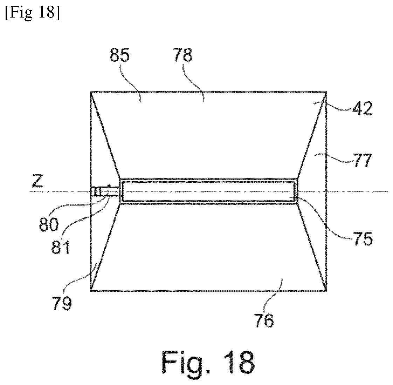

La dalle de service 42, visible sur les figures 15 à 18, comporte sur sa surface supérieure 85, une ouverture 75, dans cet exemple une ouverture centrale de forme allongée, pour permettre l'évacuation d'eaux usées, et quatre pentes 76, 77, 78 et 79 convergeant vers l'ouverture 75, en forme de pointe de diamant.

La dalle de service 42 comporte une réservation 80 délimitée par un tuyau 81, en PVC de diamètre 100 mm dans cet exemple, pour l'évacuation d'eau en provenance de l'ouverture 75.

La dalle de service 42 présente une forme globale rectangulaire d'axe longitudinal Z et est disposée sur la zone de service 40 parallèlement à l'axe longitudinal Y de la longrine de service 41. L'ouverture 75 s'étend selon cet axe Z. La longueur L_{d} de la dalle de service 42 dans cet exemple est égale à 3 m, sa largeur l_{d} est égale à 2,5 m. Son épaisseur ed est dans cet exemple égale à 0,2 m.

Bien entendu, au sein de la zone de service 40, le raccordement des différents tuyaux d'alimentation ou d'évacuation est effectué comme visible sur la figure 8.

Pour aménager une zone de service 40 à l'aide de l'équipement 2 selon l'invention, on réalise, comme visible sur la figure 9, un emplacement 90 consistant à creuser un trou et à préparer le terrain en coulant, par exemple, une dalle en béton 91 avec une surface supérieure de préférence plane. La dalle en béton 91 est coulée de manière à supporter la dalle de service 42 et la longrine de service 41, supportant elle-même la borne de service 43 comme visible sur la figure 9.

Une fois le terrain préparé pour la zone de service 40, on positionne la dalle de service 42 et la longrine de service 41 à l'emplacement prévu puis on fixe la borne de service 43.

On effectue les raccordements électriques et/ou d'eau et/ou d'informatique prévus pour la mise en service de l'aire d'étapes.

Bien entendu, l'invention n'est pas limitée aux exemples qui viennent d'être décrits.

La zone d'accès 1 peut ne comprendre qu'une seule longrine d'accès 3. Dans ce cas, l'unique longrine d'accès 3 est prévue pour permettre l'entrée et la sortie des véhicules.

Il peut y avoir plusieurs zones de service 40 sur une aire d'étapes pour camping-cars.

Dans un mode de réalisation, l'équipement 2 peut ne comporter qu'une ou plusieurs longrines de service et une ou plusieurs dalles de service. Dans ce cas, seule une ou plusieurs zones de service 40 est/sont aménagée(s) avec un équipement selon l'invention.

## Revendications

1. Equipement (2) pour aire d'étapes pour camping-cars, comportant au moins une longrine d'accès (3, 3a, 3b) préfabriquée s'étendant selon un axe longitudinal (X) et présentant plusieurs bords (15, 16, 17, 18, 19, 20) dont une surface supérieure (15), la longrine d'accès (3, 3a, 3b) comportant :
- une pluralité d'éléments de fixation (21) fixés sur la surface supérieure (15) de la longrine d'accès (3, 3a, 3b), agencés pour permettre la fixation d'au moins un mobilier urbain (4, 5, 6, 7, 9, 10) à un endroit prédéterminé et
- au moins une réservation (25, 25a, 25b) intérieure pour le passage d'au moins un câble électrique et/ou informatique afin d'alimenter ledit au moins un mobilier urbain (4, 5, 6, 7, 9, 10, 11) en électricité et/ou en connexion informatique, ladite au moins une réservation (25) traversant au moins partiellement la longrine d'accès (3, 3a, 3b) et débouchant sur au moins un de ses bords (15, 16, 17, 18, 19, 20).

2. Equipement (2) selon la revendication 1, la longrine d'accès (3, 3a, 3b) comportant en outre au moins une réservation (30) pour le passage d'un câble électrique (31) destiné à être relié à une boucle d'induction magnétique de détection de véhicule (32).

3. Equipement (2) selon l'une des revendications précédentes, dans lequel ladite réservation (25, 25a, 25b), pour le passage d'au moins un câble électrique et/ou informatique, s'étend en partie selon l'axe longitudinal (X) de la longrine d'accès (3, 3a, 3b), voire la traverse depuis un bord latéral (19) jusqu'à un bord latéral opposé (18), et comporte au moins une portion (28) s'étendant vers le haut débouchant par une ouverture (29) sur la surface supérieure (15) de la longrine d'accès (3, 3a, 3b) au niveau dudit au moins un mobilier urbain (4, 5, 6, 7, 9, 10, 11) à alimenter en électricité et/ou connexion informatique.

4. Equipement (2) selon l'une quelconque des revendications précédentes, comportant au moins un mobilier urbain (4, 5, 6, 7, 9, 10, 11), de préférence plusieurs mobiliers urbains, choisi dans le groupe constitué par un automate (4), une borne d'entrée et/ou de sortie (5, 10), un ensemble barrière (11), une armoire TGBT (Tableau Général Basse Tension) (6), un mât Wifi (9) et/ou un système de vidéo-surveillance, un luminaire, un panneau de signalisation et une caméra de plaques d'immatriculation.

5. Equipement (2) selon l'une quelconque des revendications précédentes, comportant une unique longrine d'accès (3) configurée pour permettre l'entrée et la sortie de véhicules.

6. Equipement (2) selon l'une quelconque des revendications 1 à 4, comportant deux longrines d'accès (3a, 3b), la première longrine d'accès (3a) étant configurée pour permettre l'entrée de véhicules et la deuxième longrine d'accès (3b) étant configurée pour permettre la sortie de véhicules.

7. Equipement (2) selon l'une quelconque des revendications précédentes, comportant :
- au moins une longrine de service (41), préfabriquée, s'étendant selon un axe longitudinal (Y) et présentant plusieurs bords (45, 46, 47, 48, 49, 50) dont une surface supérieure (45), la longrine de service (41) comportant au moins un élément de fixation (44) fixé sur sa surface supérieure (45) pour recevoir une borne de service (43),
- au moins une dalle de service (42), préfabriquée, associée à ladite au moins une longrine de service (41) pour l'évacuation d'eaux usées, notamment deux dalles de service (42) associées à ladite au moins une longrine de service (41).

8. Equipement (2) selon la revendication 7, ladite au moins une longrine de service (41) comportant au moins :
- une réservation (55) pour recevoir au moins un tuyau d'arrivée d'eau (56) afin d'alimenter la borne de service (43) en eau,
- au moins un caniveau de drainage (65), notamment deux caniveaux de drainage (65), ouvert(s) sur la surface supérieure (45) de ladite au moins une longrine de service (41) de manière à se trouver à côté, notamment de part et d'autre, des éléments de fixation (44) de la borne de service (41), et muni(s) d'une ouverture (66) dans le fond du ou de chaque caniveau (65) pour permettre l'évacuation d'eaux usées,
- au moins une réservation intérieure d'évacuation d'eaux usées (67) traversant la longrine de service (41) depuis un bord de celle-ci et débouchant sur ladite ou lesdites ouverture(s) (66) prévue(s) dans ledit ou lesdits caniveau(x) de drainage (65).

9. Equipement (2) selon l'une des revendications 7 et 8, comportant une réservation supplémentaire intérieure (70) d'évacuation d'eaux usées comportant au moins une portion (72) se terminant par une ouverture (73) débouchant sur la surface supérieure (45) de la longrine de service (41), pour permettre la connexion d'un tuyau d'évacuation d'eaux usées présent dans la borne de service (73).

10. Equipement (2) selon l'une quelconque des revendications 7 à 9, dans lequel la longrine de service (41) comporte au moins une réservation (60) intérieure pour le passage d'au moins un câble électrique et/ou informatique afin d'alimenter la borne de service (43) en électricité et/ou en connexion informatique.

11. Equipement (2) selon l'une quelconque des revendications 7 à 10, dans lequel la dalle de service (42) présente une ouverture (75), notamment allongée, de préférence centrale, pour permettre l'évacuation d'eaux usées, et quatre pentes (76, 77, 78, 79) convergeant vers ladite ouverture (75) formant tout ou partie de la surface supérieure de ladite dalle de service (42).

12. Equipement (2) selon l'une quelconque des revendications précédentes, ladite au moins une longrine d'accès (3, 3a, 3b) et/ou ladite au moins une longrine de service (41) comporte(nt) une pluralité d'ancres ou d'anneaux de levage (36), notamment disposées sur des bords latéraux (16, 17 ; 47, 48) de ladite au moins une longrine d'accès (3, 3a, 3b) et/ou de service (41).

13. Procédé d'aménagement d'une aire d'étapes pour camping-cars, à l'aide d'un équipement (2) selon l'une quelconque des revendications précédentes, comportant les étapes consistant à :
(a) Etape a : préparer au moins un emplacement (90) destiné à recevoir la ou chaque longrine d'accès (3, 3a, 3b) et/ou longrine de service (41) et/ou dalle de service (42),
(b) Etape b : positionner la ou chaque longrine d'accès (3, 3a, 3b) et/ou longrine de service (41) et dalle de service (42) dans ledit au moins un emplacement (90),
(c) Etape c : raccorder la ou chaque longrine d'accès (3, 3a, 3b) et/ou longrine de service (41) et dalle de service (42) à au moins une alimentation électrique et/ou une connexion informatique (25a, 25b, 60) et/ou une arrivée d'eau (56) et/ou une évacuation d'eaux usées (67, 71, 80) et/ou une ou des boucles d'induction magnétique (32),
(d) Etape d : fixer au moins un mobilier urbain (4, 5, 6, 7, 9, 10) sur la ou chaque longrine d'accès (3, 3a, 3b) et/ou une borne de service (43) sur la longrine de service (41).
